# EUROPÄISCHE PATENTSCHRIFT

(11) **EP 3 326 442 B1**
(45) Veröffentlichungstag und Bekanntmachung des Hinweises auf die Patenterteilung: **05.06.2019**
(21) Anmeldenummer: 17401116.3
(22) Anmeldetag: 16.11.2017
(51) Int. Cl.: A01C 17/00, A01C 21/00

(54) **VERFAHREN ZUM AUSBRINGEN VON DÜNGER UND MEHRSCHEIBENSTREUER**
METHOD FOR DISTRIBUTING FERTILIZER AND MULTI-DISC SPREADER
PROCÉDÉ D'ÉPANDAGE D'ENGRAIS ET ÉPANDEUR À DISQUES MULTIPLES

(30) Priorität: 29.11.2016 DE 102016122945
(43) Veröffentlichungstag der Anmeldung: 30.05.2018
(73) Patentinhaber: Amazonen-Werke H. Dreyer GmbH & Co. KG, 49205 Hasbergen (DE)
(72) Erfinder: Rahe, Florian, 49504 Lotte (DE); Meyer zu Hoberge, Jörg, 49492 Westerkappeln (DE); Kielhorn, Arnd, 49090 Osnabrück (DE); Dieckmann, Michael, 48161 Münster (DE)

(56) Entgegenhaltungen:
- EP-A1- 2 436 253
- DE-A1-102004 030 240
- DE-A1-102011 052 397

## Beschreibung

Die Erfindung betrifft ein Verfahren zum Ausbringen von Dünger mittels eines Mehrscheibenstreuers gemäß dem Oberbegriff des Anspruchs 1 sowie einen Mehrscheibenstreuer gemäß dem Oberbegriff des Anspruchs 13.

Aus der WO 2009/045114 A1 und der EP 2 436 253 A1 sind jeweils Verfahren zum Ausbringen von Dünger mittels eines Zweischeibenstreuers gemäß dem Oberbegriff des Anspruchs 1 bekannt. Demnach wird der Dünger in Form überlappender Streufächer ausgebracht, wobei beim Kurvenfahren kurveninnere Dosiermengen gegenüber dem Geradeausfahren reduziert und kurvenäußere Dosiermengen erhöht werden. Es wurde dabei bisher davon ausgegangen, dass die Streufächer auf der Kurveninnenseite pro Zeiteinheit stets eine kleinere und die Streufächer auf der Kurvenaußenseite eine größere zu düngende Fläche überstreichen als bei Geradeausfahrt. Derart angepasste Dosiermengen sollten dann einer Überdüngung auf der Kurveninnenseite und einer Unterdüngung auf der Kurvenaußenseite entgegen wirken.

Zu diesem Zweck sind die Streuscheiben und ihre Einleitsystem für Dünger jeweils bezüglich der Dosiermengen des Düngers, der Drehzahlen der Streuscheiben und der Aufgabepunkte der zugehörigen Einleitsysteme getrennt einstellbar. Ferner wird die Position des Zweischeibenstreuers mittels GPS-Standorterfassung überwacht.

Die EP 2 436 253 A1 gibt hierzu an, dass eine Anpassung der Dosiermengen vor allem entlang kontinuierlich gekrümmter Fahrspuren zweckdienlich ist. Um eine möglichst gleichmäßige Verteilung des Düngers zu beiden Seiten der Fahrspur bei Kurvenfahrten zu erzielen, sollen die Aufgabepunkte für die Streuscheiben getrennt verstellt werden, um den resultierenden Streufächer so zu verlagern, dass dessen Mitte sich immer auf der Mitte der gefahrenen Fahrstrecke befindet. Hierbei soll der jeweilige räumliche Versatz zwischen der Streuscheibe und einem äußeren Auftreffpunkt des Streufächers auf dem Boden berücksichtigt werden.

Jedoch lassen sich Aufgabepunkte auf Streuscheiben konstruktionsbedingt nur eingeschränkt verstellen, so dass der Streufächer nur bei sehr großen Kurvenradien in der Mitte der Fahrspur gehalten werden kann.

Die Verteilungsschwerpunkte beider Streufächer schwenken beim Kurvenfahren aufgrund der in der Praxis üblichen Wurfweiten hinter dem Streuer zudem stark aus, wobei sich die Fahrbewegung des Streuers und das Ausschwenken in wechselnden Richtungen zueinander überlagern, gegebenenfalls auch gegenläufig. Dies führt zu komplexen Bewegungsabläufen der Streufächer beim Kurvenfahren. Auch der kurveninnere Streufächer legt dabei meist einen größeren Weg zurück als der Streuer. Die aus dem Stand der Technik bekannte Anpassung der Dosiermengen führt daher nur in Ausnahmefällen zur gewünschten Düngerverteilung.

Es besteht daher demgegenüber der Bedarf, Überdüngung und Unterdüngung von Dünger beidseitig auch bei kleineren oder wechselnden Kurvenradien zu vermeiden. Zudem soll eine Unterdüngung an Außenecken von Feldgrenzen oder dergleichen Begrenzungen der zu düngenden Fläche, beispielsweise an Wald- und Pflanzeninseln, vermieden werden.

Die gestellte Aufgabe wird mit einem Verfahren gemäß Anspruch 1 gelöst. Demnach dient das Verfahren zum Ausbringen von Dünger mittels eines Mehrscheibenstreuers in Form überlappender Streufächer, wobei kurveninnere Dosiermengen und kurvenäußere Dosiermengen beim Kurvenfahren gegenüber dem Geradeausfahren verändert werden. Dies wirkt insbesondere einer Überdüngung und Unterdüngung während der Kurvenfahrt entgegen. Der Mehrscheibenstreuer ist insbesondere ein Zweischeibenstreuer.

Ferner wird die Bewegungsgeschwindigkeit wenigstens eines Teilbereichs der Streufächer für das Kurvenfahren berechnet. Die kurveninneren und kurvenäußeren Dosiermengen werden in Abhängigkeit von der berechneten Bewegungsgeschwindigkeit angepasst.

Die Bewegungsgeschwindigkeit ist entlang der zu düngenden Fläche definiert im Sinne einer seitlichen Fortbewegung auf der zur düngenden Fläche. Die Bewegungsgeschwindigkeit ist ein Maß für die von den Streufächern pro Zeiteinheit überstrichene Fläche.

Einer kurveninneren Überdüngung und Unterdüngung wird dadurch entgegengewirkt, dass die zugehörige Dosiermenge entsprechend einer dort herrschenden Bewegungsgeschwindigkeit angepasst wird. Auf entsprechende Weise wird einer kurvenäußeren Überdüngung und Unterdüngung durch Anpassung der zugehörigen Dosiermenge entsprechend der dort herrschenden Bewegungsgeschwindigkeit entgegengewirkt.

Ist die Bewegungsgeschwindigkeit des jeweiligen Teilbereichs größer als die Fahrgeschwindigkeit des Streuers, wird die Dosiermenge des zugeordneten Streufächers vorzugseise gegenüber dem Geradausfahren erhöht. Ist die Bewegungsgeschwindigkeit des jeweiligen Teilbereichs (in Ausnahmefällen) kleiner als die Fahrgeschwindigkeit des Streuers, wird die Dosiermenge des zugeordneten Streufächers vorzugseise gegenüber dem Geradausfahren verringert.

Vorzugsweise ist die berechnete Bewegungsgeschwindigkeit entlang einer durch Kurvenfahren erzeugten Trajektorie des Teilbereichs definiert. Bekanntermaßen schwenken die Streufächer hinter dem Mehrscheibenstreuer beim Kurvenfahren seitlich bezüglich der Fahrspur aus. Die Trajektorie entsteht aus einer Überlagerung dieser Schwenkbewegung mit der Fortbewegung des Mehrscheibenstreuers entlang der kurvenförmigen Fahrspur. Die Trajektorie ermöglicht eine standortabhängige und zeitunabhängige Positionsbestimmung des Streufächers bezüglich der Fahrspur.

Die Trajektorie kann in Echtzeit beim Ausbringen des Düngers berechnet werden. Die Trajektorie kann auch vorab berechnet werden auf der Grundlage einer Feldkarte, also dem Verlauf der Fahrspur, und anhand des im Vorfeld ermittelten Streubilds der Streufächer. Grundlegende Daten und/oder Berechnungsergebnisse können im Arbeitsbetrieb aus einem Speicher ausgelesen und aktuellen Standortdaten zugeordnet werden.

Vorzugsweise werden die kurveninneren Dosiermengen auf der Grundlage wenigstens einer kurveninneren Trajektorie und die kurvenäußeren Dosiermengen auf der Grundlage wenigstens einer kurvenäußeren Trajektorie eingestellt. Dies ermöglicht eine vergleichsweise einfache Zuordnung aktueller Standortdaten und Einstellwerte der Dosierorgane. Insbesondere bei räumlich gleichbleibender Anordnung der linken und rechten Streufächer zueinander wäre ergänzend oder alternativ eine Berechnung auf der Grundlage einer den Streufächern gemeinsamen und insbesondere zentralen Trajektorie denkbar.

Vorzugsweise ist der wenigstens eine Teilbereich ein gemeinsamer Schwerpunkt kurveninnerer und kurvenäußerer Streufächer, und/oder ein Schwerpunkt wenigstens eines kurveninneren oder kurvenäußeren Streufächers, und/oder eine Teilbreitenposition wenigstens eines kurveninneren oder kurvenäußeren Streufächers. Ein gemeinsamer Schwerpunkt eignet sich insbesondere, wenn die Wurfweiten und Abwurfwinkel der Streufächer während der Kurvenfahrt konstant sind. Separate Schwerpunkte für kurveninnere und kurvenäußere Streufächer eignen sich insbesondere für eine unabhängige Variation der Wurfweite und des Abwurfwinkels einzelner Streufächer sowie für eine direkte Zuordnung kurveninnerer Streufächer und Einstellorgane zueinander sowie für eine direkte Zuordnung kurvenäußerer Streufächer und Einstellorgane. Teilbreitenpositionen eignen sich für eine Kurvenfahrt mit Teilbreitenschaltung.

Vorzugsweise wird der Schwerpunkt durch die Mediane und/oder Mittelwerte der Wurfweite und des Abwurfwinkels des jeweiligen Streufächers definiert. Die Mediane und/oder Mittelwerte dienen zur standardisierten Charakterisierung von Streubildern und können daher für eine Vielzahl von Streuscheiben und Düngersorten aus Datenbanken abgerufen werden. Prinzipiell könnten jedoch auch andere Werte der Wurfweite und des Abwurfwinkels für die Definition der Schwerpunkte oder vergleichbarer charakteristischer Teilbereiche der Streufächer verwendet werden. Zu diesem Zweck könnten vorhandene Messwerte der Düngerverteilung beispielsweise interpoliert oder gemittelt werden.

Vorzugsweise repräsentiert die Teilbreitenposition die zugeschaltete Teilbreite oder mehrere zugeschaltete Teilbreiten des Streufächers. Die Teilbreitenposition kann im Sinne eines Schwerpunkts des Streubilds der zugeschalteten Teilbreiten berechnet werden oder von einer an sich bekannten Teilbreitenschaltung übernommen werden.

Vorzugsweise werden ferner die Abmessungen der den Teilbereichen jeweils zugeordneten Streufächer oder Teilbreiten der Streufächer bezüglich der Fahrtrichtung des Zweischeibenstreuers berechnet und die Dosiermengen auf der Grundlage der berechneten Abmessungen eingestellt. Die aktuellen Breiten und Längen der Streufächer bzw. Teilbreiten ändern sich beim Ausschwenken der Streufächer bzw. Teilbreiten bezüglich der Fahrtrichtung des Mehrscheibenstreuers. Vereinfacht gesagt, bewirkt das Ausschwenken eine von der Fahrtrichtung abweichende Querbewegung der Streufächer bzw. Teilbreiten. Durch diese Querbewegung ändert sich die von dem Streufächer oder der Teilbreite aktuell überstrichene Fläche gegenüber einer Geradeausfahrt. Durch zusätzliche Berechnung der Abmessungen der Streufächer bzw. Teilbreiten lässt sich genauer bestimmen, welche Fläche bei der Kurvenfahrt mit dem Streubild überstrichen wird.

Vorzugsweise wird ferner ein Winkel zwischen der Fahrtrichtung des Mehrscheibenstreuers und einer Bewegungsrichtung des Teilbereichs berechnet und die Dosiermengen auf der Grundlage des berechneten Winkels eingestellt. Beispielsweise können die Dosiermengen umso stärker von der Geradeausfahrt abweichen, je größer der Winkel zwischen der Fahrtrichtung des Mehrscheibenstreuers und der Bewegungsrichtung des Teilbereichs ist. Dies ermöglicht eine vergleichsweise einfache Abschätzung der Anteile einer Querbewegung durch Ausschwenken des Streufächers oder der Teilbreite und der Fortbewegung entlang der Fahrtspur.

Vereinfacht gesagt ist der Streufächer bezüglich seiner jeweiligen Bewegungsrichtung umso breiter und umso kürzer je kleiner der Winkel zwischen der Fahrtrichtung des Mehrscheibenstreuers und der Bewegungsrichtung des Teilbereichs ist. Je größer dieser Winkel beim Kurvenfahren wird, desto größer wird auch der Anteil der Ausschwenkbewegung des Streufächers im Vergleich zur Fahrbewegung des Streufächers. Bei der Anpassung der Dosiermengen kann dies berücksichtigt werden. Beispielsweise indem eine von der beim Kurvenfahren meist höheren Bewegungsgeschwindigkeit des Streufächers an sich veranlasste vorübergehende Erhöhung der Dosiermenge umso stärker abgemildert wird, je größer der Winkel zwischen der Bewegungsrichtung und der Fahrtrichtung gerade ist.

Vorzugsweise wird ferner ein zur Fahrtrichtung des Zweischeibenstreuers orthogonaler Abstand wenigstens eines Teilbereichs von einer benachbarten Feldgrenze ermittelt und der Abwurfwinkel und/oder die Wurfweite vorübergehend an den Abstand angepasst. Dadurch lässt sich insbesondere im Bereich nach außen weisender Ecken von Feldgrenzen oder dergleichen einer Unterdüngung entgegenwirken. Mit Hilfe des orthogonalen Abstands lässt sich zudem einer Überdüngung jenseits der Feldgrenze entgegenwirken.

Vorzugsweise wird im Bereich einer nach außen weisenden Ecke der Feldgrenze vorübergehend die Drehzahl wenigstens einer kurvenäußeren Scheibe erhöht und/oder der Aufgabepunkt des zugehörigen Einleitsystems nach außen gedreht. Auch dies wirkt einer Unterdüngung im Bereich der Ecke der Feldgrenze entgegen.

Vorzugsweise wird der Teilbereich anhand gespeicherter Düngerverteilungen der Streufächer bzw. der zugeschalteten Teilbreiten festgelegt. Beispielsweise können die Teilbereiche anhand zentral verfügbarer Ergebnisse von Streuversuchen oder dergleichen bestimmt werden.

Vorzugsweise wird die Bewegungsgeschwindigkeit, insbesondere einschließlich der Trajektorien, des Teilbereichs anhand einer gespeicherten Fahrwerksgeometrie des Mehrscheibenstreuers mit zugeordnetem Schlepper sowie anhand laufender Messung von Fahrgeschwindigkeiten und Lenkeinschlägen, und/oder Raddrehzahlen des Mehrscheibenstreuers oder Schleppers, und/oder GPS-Standortdaten berechnet. Das Verfahren lässt sich dann mit Hilfe herkömmlicher Sensoren und Kommunikationseinrichtungen mit einem vergleichsweise geringen technischen Aufwand durchführen.

Die gestellte Aufgabe wird ebenso mit einem Mehrscheibenstreuer gemäß Anspruch 13 gelöst. Dieser ist insbesondere ein Zweischeibenstreuer. Der Mehrscheibenstreuer eignet sich zum Ausbringen von Dünger in Form überlappender Streufächer und umfasst eine Steuereinheit, die ausgebildet ist, Dosiermengen beim Kurvenfahren gegenüber dem Geradeausfahren auf der Kurveninnenseite und auf der Kurvenaußenseite zu verändern, insbesondere um einer Überdüngung bzw. Unterdüngung entgegenzuwirken.

Ferner ist die Steuereinheit dazu ausgebildet, gemäß wenigstens einer der vorstehend beschriebenen Ausführungsformen Bewegungsgeschwindigkeiten wenigstens eines Teilbereichs der Streufächer für das Kurvenfahren zu berechnen und/oderzu speichern und die kurveninneren und kurvenäußeren Dosiermengen in Abhängigkeit von den Bewegungsgeschwindigkeiten anzupassen. Zur Anpassung der Dosiermengen sind entsprechend separat steuerbare Einstellorgane an den Dosieraggregaten der zugeordneten Streuscheiben vorhanden.

Vorzugsweise ist die Steuereinheit ferner zum separaten Anpassen kurveninnerer und kurvenäußerer Scheibendrehzahlen und/oder kurveninnerer und kurvenäußerer Aufgabepunkte für den Dünger auf der Grundlage der berechneten Bewegungsgeschwindigkeiten ausgebildet. Dadurch lassen sich die Düngerverteilungen beidseits der Fahrspur besonders flexibel für Kurvenfahrten mit unterschiedlichen Kurvenradien anpassen.

Bevorzugte Ausführungsformen der Erfindung sind in den Zeichnungen dargestellt. Es zeigen:
- Fig. 1: eine schematische Draufsicht auf einen Mehrscheibenstreuer mit Streufächern und zugeordneten Bewegungsgeschwindigkeiten;
- Fig. 2: die schematische Draufsicht der Fig. 1 mit schematisch angedeuteten Trajektorien; und
- Fig. 3: eine schematische Draufsicht auf den Mehrscheibenstreuer der Fig. 1 mit modifiziertem Streufächer und Teilbreitenschaltung.

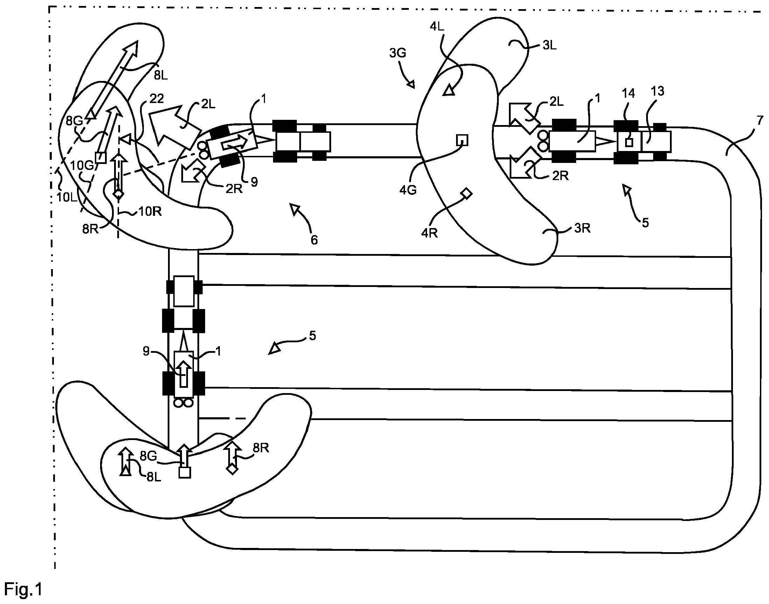

Die Fig. 1 zeigt schematisch einen Mehrscheibenstreuer 1, insbesondere Zweischeibenstreuer, zum Ausbringen von rechten und linken Dosiermengen 2R, 2L eines Düngers in Form eines rechten Streufächers 3R und eines linken Streufächers 3L, die sich mittig überlappen und sich zu einem Gesamtstreufächer 3G addieren. Die Position des rechten Streufächers 3R ist durch einen zugehörigen Teilbereich 4R definiert, die Position des linken Streufächers 3L durch einen zugehörigen Teilbereich 4L und die Position des Gesamtstreufächers 3G durch einen zugehörigen Teilbereich 4G. Zur besseren Unterscheidung sind die Teilbereiche 4R, 4L, 4G durch Rauten, Quadrate und Dreiecke symbolisiert.

Die Fig. 1 zeigt den Mehrscheibenstreuer 1 beispielhaft an drei Positionen beim Geradeausfahren 5 und beim Kurvenfahren 6 entlang einer vorgegebenen Fahrspur 7 auf einem Feld.

Schematisch angedeutet sind ferner Bewegungsgeschwindigkeiten 8R, 8L, 8G der Teilbereiche 4R, 4L, 4G beim Geradeausfahren 5 und Kurvenfahren 6 sowie eine Fahrgeschwindigkeit 9 des Scheibenstreuers 1. Beim Geradeausfahren 5 sind die Bewegungsgeschwindigkeiten 8R, 8L, 8G identisch mit der Fahrgeschwindigkeit 9 des Mehrscheibenstreuers 1. Beim Kurvenfahren 6 ist dagegen die Bewegungsgeschwindigkeit 8R des in diesen Falle kurveninneren Teilbereichs 4R am geringsten und die Bewegungsgeschwindigkeit 8L des in diesem Fall kurvenäußeren Teilbereichs 4L am höchsten. Die Bewegungsgeschwindigkeit 8G des mittleren Teilbereichs 4G liegt dazwischen. Dies ist in der Fig. 1 schematisch durch die Länge der zugehörigen Blockpfeile angedeutet.

In der Praxis sind die Bewegungsgeschwindigkeiten 8R, 8L, 8G der Teilbereiche 4R, 4L, 4G beim Kurvenfahren meist größer als die Fahrgeschwindigkeit 9. Die kurveninnere Bewegungsgeschwindigkeit (im Beispiel 8R) kann jedoch je nach Wurfweite und befahrenem Kurvenradius auch kleiner sein als die Fahrgeschwindigkeit 9.

Die jeweilige Bewegungsrichtung 10R, 10L, 10G der Teilbereiche 4R, 4L, 4G unterscheidet sich demnach beim Kurvenfahren 6 ebenso voneinander, wie in der Fig. 1 durch die Richtung der zugehörigen Blockpfeile angedeutet ist.

Ebenso ist in der Fig. 1 schematisch durch Pfeilgröße angedeutet, dass die in diesem Falle kurveninnere rechte Dosiermenge 2R und die kurvenäußere linke Dosiermenge 2L gegenüber dem Geradeausfahren 5 erhöht wird. Hierbei wird die kurveninnere Dosiermenge 2R an die Bewegungsgeschwindigkeit 8R des kurveninneren Teilbereichs 4R angepasst und die kurvenäußere Dosiermenge 2R an die Bewegungsgeschwindigkeit 8L des kurvenäußeren Teilbereichs 4L. Dadurch lässt sich eine Unterdüngung und Überdüngung des Düngers im Bereich der Streufächer 3L und 3R vermeiden.

Es versteht sich hierbei von selbst, dass die Zuordnung der rechten und linken Seite des Mehrscheibenstreuers 1 zum Kurveninneren und Kurvenäußeren beispielhaft für die dargestellte Rechtskurve gilt und bei einer Linkskurve entsprechend vertauscht würde.

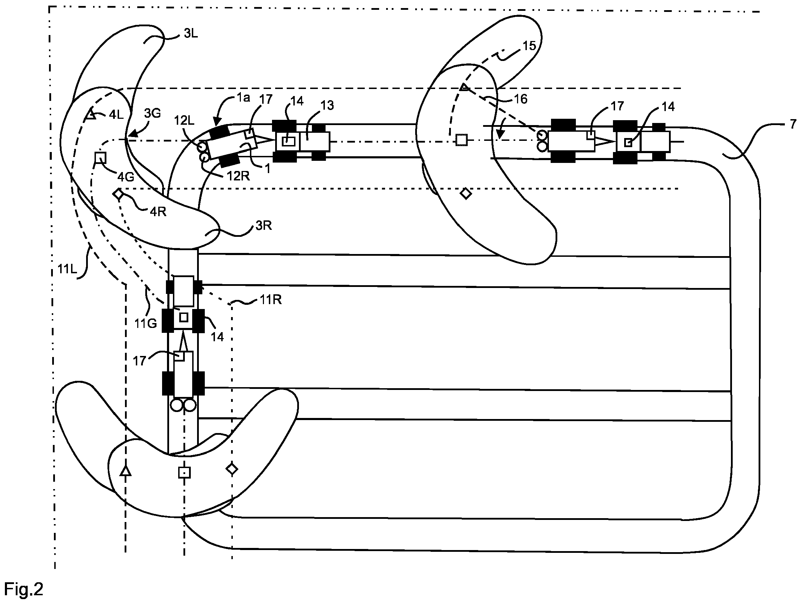

Die Fig. 2 verdeutlicht schematisch, dass die Streufächer 3R, 3L, 3G beim Kurvenfahren 6 hinter dem Mehrscheibenstreuer 1 nach außen bezüglich der Fahrspur 7 ausschwenken. Demnach bewegen sich die Teilbereiche 4R, 4L, 4G entlang zugehöriger Trajektorien 11R, 11L, 11G, deren Verlauf beim Kurvenfahren 6 aus einer Überlagerung eines Ausschwenkens der Streufächer 3R, 3L, 3G und der Fortbewegung des Mehrscheibenstreuers 1 entlang der Fahrspur 7 resultiert.

Der Verlauf der Trajektorien 11R, 11L, 11G lässt sich anhand der bekannten Anordnung der Streufächer 3R, 3L bezüglich der rechten und linken Streuscheiben 12R, 12L und des Fahrwerks 1a des Mehrscheibenstreuers 1 berechnen. Außerdem ist die Verbindung des Mehrscheibenstreuers 1 mit einem zugehörigen Schlepper 13 und die Position eines beispielsweise daran ausgebildeten Standorterfassungssystems 14 prinzipiell bekannt. Somit lassen sich die Positionen der Teilbereiche 4R, 4L, 4G und deren Trajektorien 11R, 11L, 11G anhand des Standorterfassungssystems 14 für alle Bereiche der Fahrspur 7 berechnen.

Die Teilbereiche 4R, 4L, 4G sind vorzugsweise Mengenschwerpunkte der Düngerverteilung in den Streufächern 3R, 3L, 3G. Derartige Schwerpunkte sind vorzugsweise durch den Median 15 der Wurfweite und den Median 16 des Abwurfwinkels definiert. Stellvertretend könnten jedoch auch andere für die Verteilung des Düngers in den Streufächern 3R, 3L, 3G charakteristische Teilbereiche verwendet werden. Die Bewegungsgeschwindigkeiten und gegebenenfalls die zugehörige Trajektorien wären dann für diese Teilbereiche zu ermitteln.

Die Berechnung der Bewegungsgeschwindigkeiten 8R, 8L, 8G und optional der Trajektorien 11R, 11L, 11G erfolgt in einer Steuereinheit 17, die vorzugsweise an dem Mehrscheibenstreuer 1 ausgebildet ist. Diese ist dann beispielsweise zur Verarbeitung von GPS-Standortdaten oder dergleichen des Standorterfassungssystems 14 und/oder von Daten zur Fahrgeschwindigkeit und des Lenkwinkels (nicht dargestellt) des Schleppers 13 und/oder von Daten zur Fahrgeschwindigkeit und Drehrate des Mehrscheibenstreuers 1 anhand von Drehzahlen linker und rechter Laufräder oder dergleichen ausgebildet.

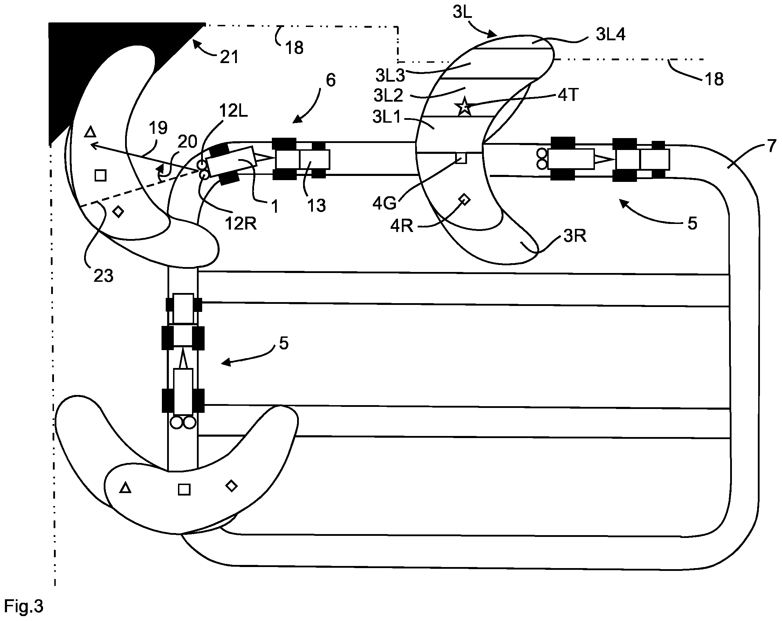

Die Fig. 3 verdeutlicht schematisch einen alternativen Teilbereich 4T in Form einer Teilbreitenposition. Im Beispiel repräsentiert der Teilbereich 4T eine gemeinsame Teilbreitenposition für die zugeschalteten Teilbreiten 3L1, 3L2, 3L3 des linken Streufächers 3L. Eine jenseits einer schematisch angedeuteten Feldgrenze 18 liegende äußere Teilbreite 3L4 des linken Streufächers 3L ist dagegen nicht zugeschaltet.

Der rechte Streufächer 3R bleibt im Beispiel der Fig. 3 unverändert, so dass der zugehörige Teilbereich 4R demjenigen der Figuren 1 und 2 entspricht. Demgegenüber verlagert sich der Teilbereich 4G des Gesamtstreubilds 3G aufgrund der Teilbreitenschaltung geringfügig in Richtung des rechten Streufächers 3R. Dies ist zur Verdeutlichung lediglich schematisch und nicht größenmaßstäblich dargestellt.

Die Fig. 3 verdeutlicht ferner, dass beim Kurvenfahren 6 insbesondere der kurvenäußere Streufächer 3L auch qualitativ verändert werden kann, indem die Wurfweite 19 und/oder der Abwurfwinkel 20 vorübergehend verändert wird, um eine nach außen weisende Ecke 21 bis zur Feldgrenze 18 ausreichend mit Dünger zu versorgen. Beispielsweise könnte die Wurfweite 19 durch Erhöhung der Drehzahl der kurvenäußeren linken Streuscheibe 12L erhöht werden. Ebenso ließe sich der Aufgabepunkt (nicht dargestellt) für Dünger über der kurvenäußeren Streuscheibe 12L separat verändern, insbesondere nach außen drehen, um den Abwurfwinkel 20 zu erhöhen und den Dünger gezielt in Richtung der Ecke 21 zu werfen. Nichtsdestoweniger kann die Dosiermenge 2L für den kurvenäußeren Streufächer 3L in Abhängigkeit von der zugehörigen Bewegungsgeschwindigkeit 8L des Teilbereichs 4L erhöht zusätzlich und an die kurzzeitig größere Arbeitsbreite angepasst werden.

In Ergänzung zu den gezeigten Varianten wäre eine Teilbreitenschaltung auch am kurveninneren Streufächer 3R denkbar. In diesem Falle wäre der als Schwerpunkt ausgebildete Teilbereich 4R durch einen als Teilbreitenposition ausgebildeten Teilbereich 4T zu ersetzen. Dies ließe sich in Analogie zum gezeigten Beispiel problemlos für eine an sich bekannte Teilbreitenschaltung durchführen.

Wie die Figuren 1 und 3 im Vergleich des Geradeausfahrens 5 unten und des Kurvenfahrens 6 links oben erkennen lassen, ändern sich beim Kurvenfahren 6 die Winkel 22 zwischen der Bewegungsrichtung 10R, 10L, 10G der Teilbereiche 4R, 4L, 4G und der Fahrtrichtung 23 des Mehrscheibenstreuers 1.

Entsprechend ändert sich die quer zur Bewegungsrichtung 10R, 10L, 10G von den Streufächern 3R, 3L, 3G überstrichene Fläche, im Sinne einer Breite des jeweiligen Streufächers 3R, 3L, 3G bezogen auf die jeweilige Bewegungsrichtung 10R, 10L, 10G. Es ist daher besonders vorteilhaft, auch die Winkel 22 zwischen den Bewegungsrichtungen der Teilbereiche 4R, 4L, 4G und der Fahrtrichtung 23 zu berechnen und die Dosiermengen 2R, 2L auch auf dieser Grundlage anzupassen. Es lässt sich damit die von den Streufächern 3R, 3L, 3G jeweils überstrichene Fläche besonders präzise berücksichtigen.

Auch die Bewegungsrichtungen 10R, 10L, 10G und die Fahrtrichtung 23 liegen aufgrund der bekannten geometrischen Zusammenhänge zwischen dem Mehrscheibenstreuer 1 und den Streufächern 3R, 3L, 3G, insbesondere nach Berechnung der Trajektorien 10R, 10L, 10G in der Steuereinheit 17 vor und können daher für die laufende Berechnung und Anpassung der Dosiermengen 2R, 2L verwendet werden.

Die geometrischen Zusammenhänge zwischen dem Fahrwerk 1a des Mehrscheibenstreuers 1 und den Streufächern 3R, 3L, 3G einerseits und einem zugehörigen Schlepper 13 andererseits sind prinzipiell vor dem Ausbringen des Düngers bekannt und können als elektronisch gespeicherte Daten für die Berechnung der Bewegungsgeschwindigkeiten 8R, 8L, 8G in der Steuereinheit 17 vorgehalten werden.

Ebenso liegen für den Verlauf der Fahrspur 7 in der Regel Positionsdaten vor. Auch kann eine Fortbewegung des Mehrscheibenstreuers 1 entlang der Fahrspur 7 vorausgesetzt werden. Die Dosiermengen 2R, 2L können daher auch vorab ortsbezogen berechnet und dann standortabhängig angepasst werden. Es wäre dann gegebenenfalls nur noch eine Standortbestimmung beim Ausbringen des Düngers nötig, so dass die Dosierorgane (nicht dargestellt) des Mehrscheibenstreuers 1 ortsbezogen eingestellt werden können.

Andererseits können Ist-Werte zu Fahrgeschwindigkeit, Orientierung, Kurvenradien oder dergleichen problemlos in Echtzeit beim Ausbringen ermittelt werden, um die Dosiermengen auf der Grundlage der dabei berechneten Bewegungsgeschwindigkeiten 8R, 8L, 8G anzupassen.

Eine Berechnung auf der Grundlage des Teilbereichs 4G des Gesamtstreufächers 3G bietet sich insbesondere an, wenn lediglich die Dosiermengen 2R, 2L beim Kurvenfahren 6 angepasst werden sollen, also eine quantitative Anpassung der Streufächer 3R, 3L vorgenommen wird und eine qualitative Anpassung der Streufächer 3R, 3L, beispielsweise durch Änderung der Wurfweite 19 und/oder des Abwurfwinkels 20 entbehrlich ist.

Nichtsdestoweniger lassen sich die beschriebenen Parameter als Grundlage für die Anpassung der Dosiermengen 2R, 2L beliebig miteinander kombinieren, um den Dünger möglichst gleichmäßig unter unterschiedlichen Einsatzbedingungen beim Kurvenfahren 6 zu verteilen.

Die Anpassung der kurvenäußeren Dosiermenge 2L und der kurveninneren Dosiermenge 2R erfolgt vorzugsweise laufend während des Ausbringens des Düngers und kann beliebig mit Teilbreitenschaltungen im Bereich von Feldgrenzen 18 oder dergleichen kombiniert werden.

Entscheidend ist, dass die Dosiermengen 2R, 2L abhängig von einer berechneten Bewegungsgeschwindigkeit 8R, 8L, 8G erfolgt und somit Ausschwenkbewegungen der Streufächer 3R, 3L, 3G auch bei engen oder variierenden Kurvenradien der Kurvenfahrt 6 berücksichtigt werden können.

## Patentansprüche

1. Verfahren zum Ausbringen von Dünger mittels eines Mehrscheibenstreuers (1), insbesondere Zweischeibenstreuers, in Form überlappender Streufächer (3R, 3L), wobei kurveninnere Dosiermengen (2R) und kurvenäußere Dosiermengen (2L) beim Kurvenfahren (6) gegenüber dem Geradeausfahren (5) verändert werden, **dadurch gekennzeichnet, dass** die Bewegungsgeschwindigkeit (8R, 8L, 8G) wenigstens eines Teilbereichs (4R, 4L, 4G, 4T) der Streufächer entlang der zu düngenden Fläche für das Kurvenfahren berechnet wird und die kurveninneren und kurvenäußeren Dosiermengen in Abhängigkeit von der berechneten Bewegungsgeschwindigkeit angepasst werden.

2. Verfahren nach Anspruch 1, wobei die berechnete Bewegungsgeschwindigkeit (8R, 8L, 8G) entlang einer durch das Kurvenfahren (6) verursachten Trajektorie (11R, 11L, 11G) des Teilbereichs (4R, 4L, 4G, 4T) definiert ist.

3. Verfahren nach Anspruch 1 oder 2, wobei kurveninnere Dosiermengen (2R) auf der Grundlage wenigstens einer kurveninneren Trajektorie (11R) und kurvenäußere Dosiermengen (2L) auf der Grundlage wenigstens einer kurvenäußeren Trajektorie (11L) eingestellt werden.

4. Verfahren nach einem der vorigen Ansprüche, wobei der wenigstens eine Teilbereich (4R, 4L, 4G, 4T) ein Schwerpunkt eines Gesamtstreufächers (3G) ist, und/oder ein Schwerpunkt wenigstens eines kurveninneren Streufächers (3R) oder wenigstens einen kurvenäußeren Streufächers (3L), und/oder eine Teilbreitenposition wenigstens eines kurveninneren Streufächers (3R) oder wenigstens eines kurvenäußeren Streufächers (3L).

5. Verfahren nach Anspruch 4, wobei der Schwerpunkt durch die Mediane oder Mittelwerte (15, 16) der Wurfweite und des Abwurfwinkels des Streufächers (3R, 3L, 3G) definiert werden.

6. Verfahren nach Anspruch 4 oder 5, wobei die Teilbreitenposition zugeschaltete Teilbreiten (3L1, 3L2, 3L3) der Streufächer (3R, 3L) repräsentieren.

7. Verfahren nach einem der vorigen Ansprüche, wobei ferner die Abmessungen den Teilbereichen (4R, 4L, 4G, 4T) jeweils zugeordneter Streufächer (3R, 3L, 3G) oder Teilbreiten (3L1, 3L2, 3L3, 3L4) der Streufächer (3R, 3L) bezüglich der Fahrtrichtung (23) des Zweischeibenstreuers (1) berechnet und die Dosiermengen (2R, 2L) auf der Grundlage der berechneten Abmessungen eingestellt werden.

8. Verfahren nach einem der vorigen Ansprüche, wobei ferner ein Winkel (22) zwischen der Fahrtrichtung (23) des Mehrscheibenstreuers (1) und einer Bewegungsrichtung (10R, 10L, 10G) des Teilbereichs (4R, 4L, 4G, 4T) berechnet und die Dosiermengen (2R, 2L) auf der Grundlage des berechneten Winkels (22) eingestellt werden.

9. Verfahren nach einem der vorigen Ansprüche, wobei ferner ein zur Fahrtrichtung (23) des Mehrscheibenstreuers (1) orthogonaler Abstand wenigstens eines Teilbereichs (4R, 4L, 4G, 4T) von einer benachbarten Feldgrenze (18) ermittelt wird und der Abwurfwinkel (20) und/oder die die Wurfweite (19) vorübergehend an den orthogonalen Abstand angepasst wird.

10. Verfahren nach einem der vorigen Ansprüche, wobei im Bereich einer nach außen weisenden Ecke (21) der Feldgrenze (18) vorübergehend die Drehzahl wenigstens einer kurvenäußeren Scheibe (12L) erhöht und/oder deren Aufgabepunkt nach außen gedreht wird.

11. Verfahren nach wenigstens einem der vorigen Ansprüche, wobei der Teilbereich (4R, 4L, 4G, 4T) auf der Grundlage gespeicherter Düngerverteilungen der Streufächer (3R, 3L, 3G) / zugeschalteter Teilbreiten (3L1, 3L2, 3L3, 3L4) festgelegt wird.

12. Verfahren nach wenigstens einem der vorigen Ansprüche, wobei die Bewegungsgeschwindigkeit (8R, 8L, 8G), und insbesondere Trajektorien (11R, 11L, 11G), des Teilbereichs (4R, 4L, 4G, 4T) anhand einer gespeicherten Fahrwerksgeometrie des Mehrscheibenstreuers (1) mit zugeordnetem Schlepper (13) sowie anhand laufender Messung von Fahrgeschwindigkeiten und Lenkeinschlägen, und/oder Raddrehzahlen des Mehrscheibenstreuers oder Schleppers, und/oder GPS-Standortdaten berechnet wird.

13. Mehrscheibenstreuer (1), insbesondere Zweischeibenstreuer, zum Ausbringen von Dünger in Form überlappender Streufächer (3R, 3L), mit einer Steuereinheit (17), die ausgebildet ist, Dosiermengen (2R, 2L) beim Kurvenfahren (6), gegenüber dem Geradeausfahren (5), auf der Kurveninnenseite und auf der Kurvenaußenseite zu verändern, **dadurch gekennzeichnet, dass** die Steuereinheit ferner ausgebildet ist, insbesondere gemäß wenigstens einem der vorigen Ansprüche, Bewegungsgeschwindigkeiten (8R, 8L, 8G) wenigstens eines Teilbereichs (4R, 4L, 4G, 4T) der Streufächer (3R, 3L) für das Kurvenfahren zu berechnen/speichern und die kurveninneren und kurvenäußeren Dosiermengen (2R, 2L) in Abhängigkeit von den Bewegungsgeschwindigkeiten anzupassen.

14. Mehrscheibenstreuer nach Anspruch 13, wobei die Steuereinheit (17) ferner zum separaten Anpassen kurveninnerer und kurvenäußerer Scheibendrehzahlen und/oder kurveninnerer und kurvenäußerer Aufgabepunkte für den Dünger auf der Grundlage der berechneten Bewegungsgeschwindigkeiten (8R, 8L, 8G) ausgebildet ist.

## Claims

1. Method for distributing fertilizer by means of a multi-disc spreader (1), in particular two-disc spreader, in the form of overlapping spreading sweeps (3R, 3L), wherein during cornering (6) metering quantities (2R) on the inside of the bend and metering quantities (2L) on the outside of the bend are changed in comparison with straight-ahead travel (5), **characterized in that** the movement speed (8R, 8L, 8G) of at least one partial region (4R, 4L, 4G, 4T) of the spreading sweeps is calculated for the cornering, along the area to be provided with fertilizer, and the metering quantities on the inside of the bend and the metering quantities on the outside of the bend are adapted as a function of the calculated movement speed.

2. Method according to Claim 1, wherein the calculated movement speed (8R, 8L, 8G) along a trajectory (11R, 11L, 11G), caused by the cornering (6), of the partial region (4R, 4L, 4G, 4T) is defined.

3. Method according to Claim 1 or 2, wherein metering quantities (2R) on the inside of the bend are adjusted on the basis of at least one trajectory (11R) on the inside of the bend and metering quantities (2L) on the outside of the bend are adjusted on the basis of at least one trajectory (11L) on the outside of the bend.

4. Method according to one of the preceding claims, wherein the at least one partial region (4R, 4L, 4G, 4T) is a centre of gravity of an overall spreading sweep (3G), and/or a centre of gravity of at least one spreading sweep (3R) on the inside of the bend or at least one spreading sweep (3L) on the outside of the bend, and/or a partial width position of at least one spreading sweep (3R) on the inside of the bend or at least one spreading sweep (3L) on the outside of the bend.

5. Method according to Claim 4, wherein the centre of gravity is defined by the medians or mean values (15, 16) of the throwing width and of the ejection angle of the spreading sweep (3R, 3L, 3G).

6. Method according to Claim 4 or 5, wherein the partial width positions represent activated partial widths (3L1, 3L2, 3L3) of the spreading sweeps (3R, 3L).

7. Method according to one of the preceding claims, wherein in addition the dimensions of spreading sweeps (3R, 3L, 3G) which are respectively assigned to the partial regions (4R, 4L, 4G, 4T) or of partial widths (3L1, 3L2, 3L3, 3L4) of the spreading sweeps (3R, 3L) are calculated with respect to the direction of travel (23) of the two-disc spreader (1), and the metering quantities (2R, 2L) are adjusted on the basis of the calculated dimensions.

8. Method according to one of the preceding claims, wherein in addition an angle (22) between the direction of travel (23) of the multi-disc spreader (1) and a direction of movement (10R, 10L, 10G) of the partial region (4R, 4L, 4G, 4T) is calculated, and the metering quantities (2R, 2L) are adjusted on the basis of the calculated angle (22).

9. Method according to one of the preceding claims, wherein in addition a distance, orthogonal with respect to the direction of travel (23) of the multi-disc spreader (1), between at least one partial region (4R, 4L, 4G, 4T) and an adjacent field boundary (18) is determined, and the ejection angle (20) and/or the the throwing width (19) are/is temporarily adapted to the orthogonal distance.

10. Method according to one of the preceding claims, wherein in the region of an outwardly pointing corner (21) of the field boundary (18) the rotational speed of at least one disc (12L) on the outside of the bend is temporarily increased and/or the application point thereof is rotated outwards.

11. Method according to at least one of the preceding claims, wherein the partial region (4R, 4L, 4G, 4T) is defined on the basis of stored fertilizer distributions of the spreading sweeps (3R, 3L, 3G) / activated partial widths (3L1, 3L2, 3L3, 3L4).

12. Method according to at least one of the preceding claims, wherein the movement speed (8R, 8L, 8G) and, in particular, trajectories (11R, 11L, 11G), of the partial region (4R, 4L, 4G, 4T), is calculated on the basis of a stored running gear geometry of the multi-disc spreader (1) with an assigned tractor (13) as well as on the basis of ongoing measurement of driving velocities and steering locks and/or wheel rotational speeds of the multi-disc spreader or tractor and/or GPS location data.

13. Multi-disc spreader (1), in particular two-disc spreader, for distributing fertilizer in the form of overlapping spreading sweeps (3R, 3L), having a control unit (17) which is designed to change metering quantities (2R, 2L) during cornering (6), with respect to the straight-ahead travel (5), on the inside of the bend and on the outside of the bend, **characterized in that** the control unit is also designed, in particular according to at least one of the preceding claims, to calculate/store movement speeds (8R, 8L, 8G) of at least one partial region (4R, 4L, 4G, 4T) of the spreading sweeps (3R, 3L) for cornering and to adapt the metering quantities (2R, 2L) on the inside of the bend and on the outside of the bend as a function of the movement speeds.

14. Multi-disc spreader according to Claim 13, wherein the control unit (17) is also designed to adapt separately disc rotational speeds of the inside of the bend and on the outside of the bend and/or application points on the inside of the bend and on the outside of the bend for the fertilizer on the basis of the calculated movement speeds (8R, 8L, 8G).

## Revendications

1. Procédé d'épandage d'engrais au moyen d'un épandeur à disques multiples (1), notamment d'un épandeur à deux disques, sous la forme de plateaux d'épandage (3R, 3L) se superposant, les quantités dosées d'intérieur de virage (2R) et les quantités dosées d'extérieur de virage (2L) étant modifiées lors des trajets en virage (6) par rapport aux trajets en ligne droite (5), **caractérisé en ce que** la vitesse de déplacement (8R, 8L, 8G) d'au moins un plateau partiel (4R, 4L, 4G, 4T) des plateaux d'épandage le long de la surface à fertiliser est calculée pour le trajet en virage et les quantités dosées d'intérieur de virage et d'extérieur de virage sont adaptées en fonction de la vitesse de déplacement calculée.

2. Procédé selon la revendication 1, la vitesse de déplacement (8R, 8L, 8G) calculée étant définie le long d'une trajectoire (11R, 11L, 11G) du plateau partiel (4R, 4L, 4G, 4T) causée par le trajet en virage (6).

3. Procédé selon la revendication 1 ou 2, les quantités dosées d'intérieur de virage (2R) étant réglées sur la base d'au moins une trajectoire d'intérieur de virage (11R) et les quantités dosées d'extérieur de virage (2L) sur la base d'au moins une trajectoire d'extérieur de virage (11L).

4. Procédé selon l'une des revendications précédentes, l'au moins un plateau partiel (4R, 4L, 4G, 4T) étant un barycentre d'un plateau d'épandage global (3G) et/ou un barycentre d'au moins un plateau d'épandage d'intérieur de virage (3R) ou d'au moins un plateau d'épandage d'extérieur de virage (3L) et/ou une position de largeur partielle d'au moins un plateau d'épandage d'intérieur de virage (3R) ou d'au moins un plateau d'épandage d'extérieur de virage (3L).

5. Procédé selon la revendication 4, le barycentre étant défini par les médianes ou les valeurs centrales (15, 16) de la largeur de projection et de l'angle de projection des plateaux d'épandage (3R, 3L, 3G).

6. Procédé selon la revendication 4 ou 5, la position de largeur partielle représentant les largeurs partielles (3L1, 3L2, 3L3) activées des plateaux d'épandage (3R, 3L).

7. Procédé selon l'une des revendications précédentes, les dimensions des plateaux d'épandage (3R, 3L, 3G) respectivement associés aux plateaux partiels (4R, 4L, 4G, 4T) ou les largeurs partielles (3L1, 3L2, 3L3, 3L4) des plateaux d'épandage (3R, 3L) étant en outre calculées en référence à la direction de trajet (23) de l'épandeur à deux disques (1) et les quantités dosées (2R, 2L) étant réglées sur la base des dimensions calculées.

8. Procédé selon l'une des revendications précédentes, un angle (22) entre la direction de trajet (23) de l'épandeur à disques multiples (1) et un sens de trajet (10R, 10L, 10G) du plateau partiel (4R, 4L, 4G, 4T) étant en outre calculé et les quantités dosées (2R, 2L) étant réglées sur la base de l'angle (22) calculé.

9. Procédé selon l'une des revendications précédentes, un écart orthogonal par rapport à la direction de trajet (23) de l'épandeur à disques multiples (1) entre au moins un plateau partiel (4R, 4L, 4G, 4T) et une limite de champ (18) voisine étant en outre déterminé et l'angle de projection (20) et/ou la la largeur de projection (19) étant temporairement adapté à l'écart orthogonal.

10. Procédé selon l'une des revendications précédentes, la vitesse de rotation d'au moins un disque d'extérieur de virage (12L) étant temporairement augmentée et/ou sont point d'alimentation temporairement tourné vers l'extérieur dans la zone d'un coin (21) de la limite de champ (18) orienté vers l'extérieur.

11. Procédé selon au moins l'une des revendications précédentes, le plateau partiel (4R, 4L, 4G, 4T) étant définie sur la base des distributions d'engrais mémorisées des plateaux d'épandage (3R, 3L, 3G)/des largeurs partielles (3L1, 3L2, 3L3, 3L4) activées.

12. Procédé selon au moins l'une des revendications précédentes, la vitesse de déplacement (8R, 8L, 8G), et notamment les trajectoires (11R, 11L, 11G) du plateau partiel (4R, 4L, 4G, 4T) étant calculées à l'aide d'une géométrie de châssis mémorisée de l'épandeur à disques multiples (1) avec le tracteur (13) associé ainsi qu'à l'aide d'une mesure continue des vitesses de trajet des braquages de direction et/ou des vitesses de rotation de roue de l'épandeur à disques multiples ou du tracteur et/ou de données d'emplacement GPS.

13. Épandeur à disques multiples (1), notamment d'un épandeur à deux disques, destiné à épandre de l'engrais sous la forme de plateaux d'épandage (3R, 3L) se superposant, comprenant une unité de commande (17) qui est configurée pour modifier les quantités dosées d'intérieur (2R, 2L) lors des trajets en virage (6) par rapport aux trajets en ligne droite (5), sur le côté intérieur de virage et sur le côté extérieur de virage, **caractérisé en ce que** l'unité de commande est en outre configurée, notamment selon au moins l'une des revendications précédentes, pour calculer/mémoriser les vitesses de déplacement (8R, 8L, 8G) d'au moins un plateau partiel (4R, 4L, 4G, 4T) des plateaux d'épandage (3R, 3L) pour le trajet en virage et pour adapter les quantités dosées (2R, 2L) d'intérieur de virage et d'extérieur de virage en fonction des vitesses de déplacement.

14. Épandeur à disques multiples selon la revendication 13, l'unité de commande (17) étant en outre configurée pour adapter séparément les vitesses de rotation de disque d'intérieur de virage et d'extérieur de virage et/ou les points d'alimentation d'intérieur de virage et d'extérieur de virage pour l'engrais en fonction des vitesses de déplacement (8R, 8L, 8G) calculées.
